# DEMANDE DE BREVET EUROPEEN

(11) **EP 0 783 835 A1**
(43) Date de publication de la demande: **16.07.1997**
(21) Numéro de dépôt: 95402967.4
(22) Date de dépôt: 28.12.1995
(51) Int. Cl.: A01K 97/12

(54) **Dispositif de détection centralisée de touches d'un ensemble de cannes à pêche**

(71) Demandeur: EUROCASTING, 28230 Epernon (FR)
(72) Inventeur: Citry, Eric, 28230 Epernon (FR)
(74) Mandataire: Thibon-Littaye, Annick

(57) **Abrégé**

L'invention concerne un dispositif de détection, par une centrale, d'une touche sur au moins une canne à pêche d'un ensemble de cannes à pêche, dans lequel chaque canne à pêche est équipée d'un détecteur de touche et la centrale peut recevoir un signal de touche provenant de chacune des cannes dudit ensemble. Chaque détecteur comporte un émetteur de radiofréquences intégré (3) et la centrale comporte un récepteur de radiofréquences intégré, lesdits émetteurs (3) et ledit récepteur pouvant chacun être accordé à volonté sur un nombre déterminé de fréquences codées. L'invention permet de surveiller un grand nombre de lignes aisément et sans risque d'interférence.

## Description

La présente invention concerne la détection centralisée de touches d'un ensemble de cannes à pêche utilisées pour la pêche de la carpe, du silure, et plus généralement de tous les poissons.

On connaît des dispositifs qui permettent à un pêcheur de surveiller à distance une ou plusieurs lignes disposées sur un porte cannes. Chaque canne à pêche est équipée d'un détecteur de touche qui envoie un signal d'alarme à une centrale qui est disposée à distance et peut recevoir un signal de touche provenant de chacune des cannes. La liaison entre les cannes à pêche et la centrale est réalisée au moyen d'un câble électrique, la centrale comportant plusieurs connecteurs recevant chacun un câble provenant d'une canne. La centrale comporte des dispositifs d'alarme visuelle, par exemple de couleurs différentes, associés chacun à une ligne.

Ce dispositif connu présente un certain nombre d'inconvénients.

Tout d'abord, il est encombrant, les câbles s'entrecroisant et comme ils peuvent s'emmêler dans le vent, la pluie, etc., sa mise en place est longue et malaisée.

La distance entre la centrale et les lignes est limitée. Le nombre de lignes surveillées par une centrale est limitée, et cela ne permet pas de surveiller, avec sa centrale, les lignes de pêcheurs voisins qui s'absentent.

On a également proposé d'adjoindre à chaque ligne un ensemble d'un émetteur de radiofréquences à portée limitée disposé sur le détecteur de la ligne et d'un récepteur associé, les différents émetteurs étant groupés et émettant sur la centrale précitée. Les ensembles émetteur-récepteur sont accordés sur des fréquences identiques, la fréquence choisie entre l'émetteur et le récepteur est fixe et elle est déterminée à l'achat de l'appareil.

Ce système est relativement complexe et coûteux ; il présente le danger d'interférences avec d'autres systèmes voisins.

Par ailleurs, si l'un des éléments, émetteur ou récepteur, d'un ensemble est défectueux, l'ensemble émetteur-récepteur est inutilisable et il faut le changer en entier ou pouvoir déterminer sa fréquence pour ne changer que l'élément défectueux.

L'invention se propose de fournir un dispositif de détection, par une centrale, d'une touche sur au moins une canne à pêche d'un ensemble de cannes à pêche, dans lequel chaque canne à pêche est équipée d'un détecteur de touche et la centrale peut recevoir un signal de touche provenant de chacune des cannes dudit ensemble, qui ne présente pas les inconvénients précités.

Il est notamment remarquable en ce que chaque détecteur comporte un émetteur de radiofréquences intégré et en ce que la centrale comporte un récepteur de radiofréquences intégré, lesdits émetteurs et ledit récepteur pouvant chacun être accordé à volonté sur un nombre déterminé de fréquences codées.

La structure du dispositif selon l'invention est très simple puisque les émetteurs et le récepteur sont intégrés dans les détecteurs et la centrale. Par ailleurs, il n'y a pas de câbles de liaison, ce qui supprime une gêne importante.

Les différents émetteurs et le récepteur peuvent être réglés sur plusieurs fréquences, ce qui permet de choisir une fréquence qui ne présente pas d'interférence avec des systèmes voisins.

A une centrale unique on peut associer un nombre relativement important de lignes ; ceci permet en particulier de pouvoir surveiller aisément les lignes d'un pêcheur voisin disposant d'un même dispositif ; il suffit alors de régler la fréquence des émetteurs des lignes du pêcheur qui s'absente sur la fréquence du pêcheur qui reste.

L'ensemble des détecteurs et de la centrale constitue un produit standard, ce qui permet de ne changer que l'élément défectueux en cas de panne sans avoir à spécifier une fréquence.

Le fait que les émetteurs et le récepteur sont logées dans les détecteurs et la centrale permet d'obtenir un produit pratique, robuste et fiable ; en particulier, la protection contre les agents extérieurs est déjà réalisée dans les détecteurs et la centrale.

Avantageusement, l'antenne du récepteur de la centrale est constituée par une inductance miniature à sortie radiale munie d'un fil conducteur intégré dans le boîtier de la centrale. Il en est avantageusement de même pour l'émetteur.

Ceci permet d'obtenir une réception correcte à une distance suffisante sans avoir d'antenne ou de fil extérieurs, ce qui contribue encore à la robustesse et à la fiabilité du dispositif.

Selon une autre caractéristique de l'invention, le détecteur de touches et la centrale comportent un commutateur mécanique permettant le choix de la fréquence codée, qui est relié à un codeur-décodeur en binaire codé décimal branché sur l'émetteur de chaque détecteur de touches, respectivement sur le récepteur de la centrale.

Ceci permet de régler les émetteurs et le récepteur sur la même fréquence codée sans risque d'erreur, les différents commutateurs étant réglés sur la même position.

Selon encore une autre caractéristique de l'invention, chaque détecteur de touche et la centrale comportent une alimentation intégrée et un dispositif d'alarme sonore comportant un potentiomètre de réglage du volume, et chaque alimentation est commandée par un interrupteur associé audit potentiomètre.

Ceci permet de limiter la consommation des différents éléments qui sont mis en service individuellement en fonction de l'utilisation.

D'autres caractéristiques et avantages de l'invention ressortiront de la description qui suit d'un exemple de réalisation, faite en se référant aux dessins ci-annexés sur lesquels:
- la figure 1 est le schéma synoptique d'un détecteur de touche selon l'invention, et
- la figure 2 est le schéma synoptique d'une centrale selon l'invention.

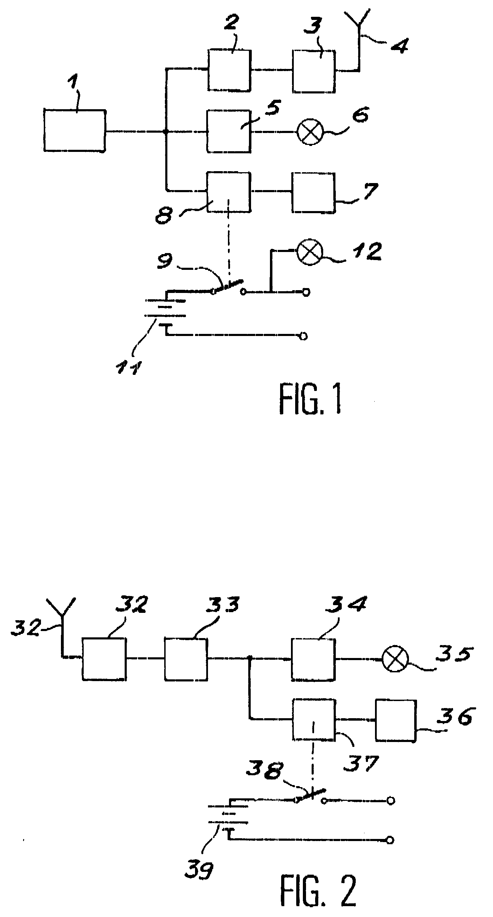

On voit sur la figure 1 un capteur 1 de type connu, comportant par exemple une cellule photoélectrique associée a une roue à pales entraînée par la ligne de la canne. lorsqu'il y a une touche, ce capteur fournit un signal électrique qui est envoyé sur un codeur-décodeur en binaire codé décimal 2 qui est associé à un commutateur mécanique disposé sur le boîtier du détecteur de touche et présentant dix positions repérées de 0 à 9. La sortie de ce codeur-décodeur est reliée à un émetteur 3 muni d'une antenne 4.

Le signal fourni par le capteur 1 est également envoyé sur un circuit à retard 5, réglé par exemple à 15 secondes, qui commande un dispositif d'alarme visuelle 6, constitué par exemple par une diode électroluminescente.

Enfin, le signal de sortie du capteur 1 est envoyé sur un dispositif d'alarme sonore 7, constitué par exemple par un vibreur sonore, dont la puissance est réglée par un potentiomètre 8 associé à un interrupteur 9.

L'interrupteur 9 commande le circuit d'alimentation du détecteur. Ce circuit comporte une source de tension 11, par exemple des piles ou des éléments rechargeables, et un voyant de fonctionnement 12, par exemple une diode électroluminescente.

L'ensemble de ces éléments est réalisé sous la forme d'une carte de circuit imprimé ; en particulier, l'antenne 4 est constituée par une inductance miniature à sortie radiale, munie d'un fil d'antenne souple intégré dans le boîtier. Ce circuit est recouvert de résine de manière à obtenir une étanchéité parfaite et logé dans le boîtier du détecteur. Il comporte avantageusement un coupe-circuit économiseur de pile.

La centrale représentée sur la figure 2 comporte un récepteur 31 relié à une antenne 32. La sortie de ce récepteur est reliée à un codeur-décodeur 33, le même que celui, 2, du détecteur, qui est également associé à un commutateur mécanique fixé sur le boîtier de la centrale.

Le signal de sortie du codeur-décodeur 33 est envoyé à un circuit à retard 34, réglé par exemple à 15 secondes, qui commande un dispositif d'alarme visuelle 35, constitué par exemple par une diode électroluminescente.

Le signal de sortie du décodeur 33 est également envoyé sur un dispositif d'alarme sonore 36, constitué par exemple par un vibreur sonore, dont la puissance est réglée par un potentiomètre 37 associé à un interrupteur 38.

L'interrupteur 38 commande le circuit d'alimentation de la centrale, qui comporte une source de tension 39, par exemple des piles ou des éléments rechargeables.

Conformément à l'invention, l'antenne 32 est constituée par un fil conducteur souple disposé dans le boîtier de la centrale. Sa longueur est d'environ 20 cm et il est disposé de manière à constituer une boucle dans le boîtier.

L'ensemble de ces circuits est réalisé sous la forme d'une carte de circuit imprimé qui est recouverte de résine de manière à obtenir une étanchéité parfaite et logée dans le boîtier de la centrale. L'antenne 32 est constituée comme pour l'émetteur, par une inductance miniature à sortie radiale munie d'un fil d'antenne souple qui est enroulé autour de la carte de circuit imprimé.

Chaque pêcheur dispose d'un ensemble de plusieurs détecteurs de touche et d'une seule centrale qu'il règle sur la même fréquence en plaçant les commutateurs sur la même position. Dans un mode de réalisation pratique de l'invention, les fréquences des émetteurs et du récepteur sont de 433,920 Mhz avec un variation de plus ou moins 550 khz. La centrale est de faible encombrement et elle peut être portée par l'utilisateur qui la met en route avec l'interrupteur 38 ; il place ensuite un détecteur sur chacune de ses lignes et le met en fonctionnement au moyen de l'interrupteur 9.

Le pêcheur peut alors se déplacer au voisinage de ses lignes, la puissance des émetteurs et les caractéristiques du récepteur sont réglés pour une portée maximale égale, par exemple, à 100 m.

Lorsqu'un détecteur est actionné par une touche sur la ligne, le capteur 1 active l'émetteur 3, le voyant 6 et le vibreur 12. le récepteur 31 reçoit le signal émis et active le voyant 35 et le vibreur 36. Il y a donc au niveau de la centrale une double alarme, visuelle et sonore, et le pêcheur regarde alors ses cannes pour repérer celle dont le détecteur clignote et la saisir.

On voit que l'invention permet de disposer d'un système simple robuste et fiable pour surveiller plusieurs cannes à pêche, le nombre n'étant pas limité, ce qui permet en particulier à chacun de surveiller les lignes de pêcheurs voisins qui désirent s'absenter. Le nombre de fréquences codées est avantageusement égal à dix, ce qui permet d'éviter toute interférence, compte tenu de la portée maximale d'un ensemble émetteur-récepteur.

## Revendications

1. Dispositif de détection, par une centrale, d'une touche sur au moins une canne à pêche d'un ensemble de cannes à pêche, dans lequel chaque canne à pêche est équipée d'un détecteur de touche et la centrale peut recevoir un signal de touche provenant de chacune des cannes dudit ensemble, caractérisé en ce que chaque détecteur comporte un émetteur de radiofréquences intégré (3) et la centrale comporte un récepteur de radiofréquences intégré (31), lesdits émetteurs (3) et ledit récepteur (31) pouvant chacun être accordé à volonté sur un nombre déterminé de fréquences codées.

2. Dispositif de détection selon la revendication 1, caractérisé en ce que l'antenne (32)du récepteur (31) de la centrale comporte un fil d'antenne intégré dans le boîtier de la centrale.

3. Dispositif de détection selon la revendication 1 ou 2, caractérisé en ce que l'antenne (4) de chaque émetteur est constituée par une inductance miniature à sortie radiale munie d'un fil d'antenne souple intégré dans le boîtier du détecteur.

4. Dispositif de détection selon l'une quelconque des revendications 1, 2 ou 3, caractérisé en ce que le détecteur de touches et la centrale comportent un commutateur mécanique permettant le choix de la fréquence codée.

5. Dispositif de détection selon la revendication 4, caractérisé en ce que le commutateur mécanique est relié à un codeur-décodeur (2, 33) en binaire codé décimal branché sur l'émetteur (3) de chaque détecteur de touches, respectivement sur le récepteur (31) de la centrale.

6. Dispositif de détection selon l'une quelconque des revendications 1, 4 ou 5, caractérisé en ce que chaque détecteur de touche et la centrale comportent une alimentation intégrée (11, 39) et un dispositif d'alarme sonore (7, 36) comportant un potentiomètre (8, 37) de réglage du volume et en ce chaque alimentation (11, 39) est commandée par un interrupteur (9, 38) associé audit potentiomètre.

7. Dispositif de détection selon l'une quelconque des revendications 1 à 6, caractérisé en ce que chaque détecteur de touches et la centrale comportent un dispositif d'alarme visuelle temporisé (5-6, 36-37).

8. Dispositif de détection selon l'une quelconque des revendications 1 à 7, caractérisé en ce que le nombre de fréquences codées est environ égal à 10.
